# EUROPEAN PATENT APPLICATION

(11) **EP 2 781 388 A1**
(43) Date of publication of application: **24.09.2014**
(21) Application number: 12850536.9
(22) Date of filing: 09.11.2012
(51) Int. Cl.: B60K 1/04, B60K 11/06

(54) **BATTERY PACK FOR ELECTRIC VEHICLE**

(30) Priority: 14.11.2011 JP 2011248434
(71) Applicant: Honda Motor Co., Ltd., Minato-ku Tokyo 107-8556 (JP)
(72) Inventor: ITO Kosuke, Wako-shi Saitama 351-0193 (JP); KATAYAMA Goichi, Wako-shi Saitama 351-0193 (JP); YAMAMOTO Koichi, Wako-shi Saitama 351-0193 (JP)
(74) Representative: Feller, Frank
(86) International application number: PCT/JP2012/079098
(87) International publication number: WO 2013/073463

(57) **Abstract**

In a battery pack for an electric vehicle, since a cooling air suction port (48a) of a suction duct (48) that sucks cooling air into a cooling passage formed in an interior of a battery case (24) is disposed between a vehicle compartment (25) and the battery case (24) beneath the vehicle compartment (25), the cooling air suction port (48a) can be disposed at a relatively high position, and due to it being covered by the battery case (24) and the vehicle compartment (25), it can be made difficult for dirt or water splashed up from below by a wheel or dirt or water falling from above to be sucked from the cooling air suction port (48a) into the battery case (24). Moreover, since the cooling air suction port (48a) of the suction duct (48) opens so as to face toward the front of the vehicle body and a cooling air discharge port (49a) of a discharge duct (49) opens so as to face toward the rear of the vehicle body, it is possible to prevent the cooling efficiency of the battery (42) from being degraded due to recirculation of cooling air.

## Description

### TECHNICAL FIELD

The present invention relates to a battery pack for an electric vehicle that includes a battery case that houses a plurality of batteries and is disposed beneath a vehicle compartment, a cooling air suction member that sucks cooling air into a cooling passage formed in an interior of the battery case, and a cooling air discharge member that discharges cooling air from the cooling passage.

### BACKGROUND ART

An arrangement in which an intake duct, a battery case, a first exhaust duct, a ventilation fan, and a second exhaust duct are connect in series, by driving the ventilation fan air within a vehicle compartment is sucked in via the intake duct to be supplied to the battery case, thus cooling the battery, and exhaust air exiting from the battery case is discharged via the first exhaust duct, the ventilation fan, and the second exhaust duct is known from Patent Document 1 below.

### RELATED ART DOCUMENTS

### PATENT DOCUMENTS

Patent Document 1: Japanese Patent No. 4547747

### SUMMARY OF THE INVENTION

### PROBLEMS TO BE SOLVED BY THE INVENTION

In the arrangement disclosed in Patent Document 1 above, the battery case is disposed within the vehicle compartment, but when a battery case is disposed outside a vehicle compartment and cooling of a battery is carried out using air outside the vehicle compartment as cooling air, not only is there a possibility of dust or water contained in the cooling air being sucked into the battery case via an intake duct, but there is also a possibility that exhaust air having an increased temperature will be sucked into the battery case again as intake air, thus degrading the battery cooling efficiency.

The present invention has been accomplished in light of the above-mentioned circumstances, and it is an object thereof to prevent dust or water from being sucked into a battery case disposed outside a vehicle compartment and to prevent cooling air exhaust from being recirculated as intake air.

### MEANS FOR SOLVING THE PROBLEMS

In order to attain the above object, according to a first aspect of the present invention, there is provided a battery pack for an electric vehicle, comprising a battery case that houses a plurality of batteries and is disposed beneath a vehicle compartment, a cooling air suction member that sucks cooling air into a cooling passage formed in an interior of the battery case, and a cooling air discharge member that discharges cooling air from the cooling passage, wherein the cooling air suction member has a cooling air suction port disposed between the battery case and the vehicle compartment and opening so as to face toward the front of a vehicle body, and the cooling air discharge member has a cooling air discharge port opening so as to face toward the rear of the vehicle body.

Further, according to a second aspect of the present invention, in addition to the first aspect, the cooling air discharge member has the cooling air discharge port opening toward the rear of the vehicle body and outward in a vehicle width direction.

Furthermore, according to a third aspect of the present invention, in addition to the second aspect, the vehicle comprises a suspension system for suspension of wheels, a virtual line that is perpendicular to an open end face of the cooling air discharge port intersecting the suspension system when seen in a plan view.

Moreover, according to a fourth aspect of the present invention, in addition to the second or third aspect, the cooling air discharge port opens on an outer periphery of a cooling fan that is housed in an interior of the cooling air discharge member, an open end face of the cooling air discharge port being inclined relative to a plane that is perpendicular to the direction in which the cooling fan blows.

Further, according to a fifth aspect of the present invention, in addition to the fourth aspect, two fan casings for the cooling fans individually housed in the interiors of two of the cooling air discharge members that are disposed apart in the vehicle width direction are interchangeable members having an identical shape.

Furthermore, according to a sixth aspect of the present invention, in addition to any one of the first to fifth aspects, the battery case comprises a projecting portion that protrudes upwardly toward the vehicle compartment, and the cooling air suction member is disposed to the rear of the projecting portion.

Moreover, according to a seventh aspect of the present invention, in addition to any one of the first to sixth aspects, the cooling air suction member is disposed in an upper part of a rear end of the battery case.

A battery module 42 of an embodiment corresponds to the battery of the present invention, a suction duct 48 of the embodiment corresponds to the cooling air suction member of the present invention, and a discharge duct 49 of the embodiment corresponds to the cooling air discharge member of the present invention.

### EFFECTS OF THE INVENTION

In accordance with the first aspect of the present invention, since the cooling air suction port of the cooling air suction member that sucks cooling air into the cooling passage formed in the interior of the battery case is disposed between the vehicle compartment and the battery case beneath the vehicle compartment, the cooling air suction port can be disposed at a relatively high position, and due to it being covered by the battery case and the vehicle compartment, it can be made difficult for dirt or water splashed up from below by a wheel or dirt or water falling from above to be sucked into the battery case. Moreover, since the cooling air suction port of the cooling air suction member opens so as to face toward the front of the vehicle body and the cooling air discharge port of the cooling air discharge member opens so as to face toward the rear of the vehicle body, it can be made difficult for cooling air that has been discharged from the cooling air discharge port and has an increased temperature after heat exchange to be sucked again into the battery case via the cooling air suction port, and it is possible to prevent the battery cooling efficiency from being degraded due to recirculation of cooling air.

Furthermore, in accordance with the second aspect of the present invention, since the cooling air discharge port of the cooling air discharge member opens so as to face toward the rear of the vehicle body and outward in the vehicle width direction, the discharged cooling air is pushed rearwardly by means of traveling air flowing along left and right side faces of the vehicle body, thereby making it difficult for it to stay in the vicinity of the battery pack.

Moreover, in accordance with the third aspect of the present invention, since the vehicle includes the suspension system for suspension of the wheels and the virtual line perpendicular to the open end face of the cooling air discharge port intersects the suspension system when seen in a plan view, cooling air discharged via the cooling air discharge port can be efficiently discharged to the outside through gaps in the suspension system.

Furthermore, in accordance with the fourth aspect of the present invention, since the cooling air discharge port opens on the outer periphery of the cooling fan housed in the interior of the cooling air discharge member, and the open end face of the cooling air discharge port is inclined relative to the plane perpendicular to the direction in which the cooling fan blows, the direction in which cooling air is discharged from the open end face can easily be displaced relative to the direction in which the cooling fan blows, and even when there is a restriction on the layout of the cooling air discharge port the direction of discharge of cooling air can be set freely.

Moreover, in accordance with the fifth aspect of the present invention, since the two fan casings for cooling fans individually housed in the interiors of the two cooling air discharge members disposed apart in the vehicle width direction are interchangeable members having an identical shape, even if the directions of cooling air discharged from the two cooling air discharge ports are nonsymmetrical relative to the vehicle body center line, inclining the open end face of the cooling air discharge port relative to the plane perpendicular to the direction in which the cooling fan blows enables the directions in which cooling air is discharged from the two cooling air discharge ports to be made close to symmetrical, thus enabling the cost to be reduced by making a common casing for the two fan casings.

Furthermore, in accordance with the sixth aspect of the present invention, since the projecting portion protruding upwardly toward the vehicle compartment side is provided on the battery case, and the cooling air suction member is disposed to the rear of the projecting portion, the projecting portion of the battery case can provide shielding from dust or water scattered from the front of the vehicle body while the vehicle is traveling and it can be made difficult for it to be sucked into the battery case via the cooling air suction member.

Moreover, in accordance with the seventh aspect of the present invention, since the cooling air suction member is disposed in the upper part of the rear end of the battery case, the battery case or the vehicle body can provide shielding from dust or water scattered from the front of the vehicle body while the vehicle is traveling and it can be made difficult for it to be sucked into the battery case via the cooling air suction member.

### BRIEF DESCRIPTION OF DRAWINGS

[FIG. 1] FIG. 1 is a side view of an electric automobile. (first embodiment)
[FIG. 2] FIG. 2 is a perspective view of a vehicle body frame and a battery pack. (first embodiment)
[FIG. 3] FIG. 3 is a perspective view of the battery pack. (first embodiment)
[FIG. 4] FIG. 4 is a view in the direction of arrow 4 in Fig. 1. (first embodiment)
[FIG. 5] FIG. 5 is a sectional view along line 5-5 in FIG. 4. (first embodiment)
[FIG. 6] FIG. 6 is a sectional view along line 6-6 in FIG. 4. (first embodiment)
[FIG. 7] FIG. 7 is an enlarged view of an essential part of FIG. 4. (first embodiment)
[FIG. 8] FIG. 8 is a sectional view along line 8-8 in FIG. 7. (first embodiment)
[FIG. 9] FIG. 9 is a view in the direction of arrow 9 in Fig. 7. (first embodiment)
[FIG. 10] FIG. 10 is a view in the direction of arrow 10 in Fig. 9. (first embodiment)
[FIG. 11] FIG. 11 is a view, corresponding to FIG. 3, for explaining the operation. (first embodiment)

### EXPLANATION OF REFERENCE NUMERALS AND SYMBOLS

24 Battery case
25 Vehicle compartment
39a Projecting portion
42 Battery module (battery)
47 Cooling fan
48 Suction duct (cooling air suction member)
48a Cooling air suction port
49 Discharge duct (cooling air discharge member)
49a Cooling air discharge port
58 Fan casing
59 Suspension system

### MODES FOR CARRYING OUT THE INVENTION

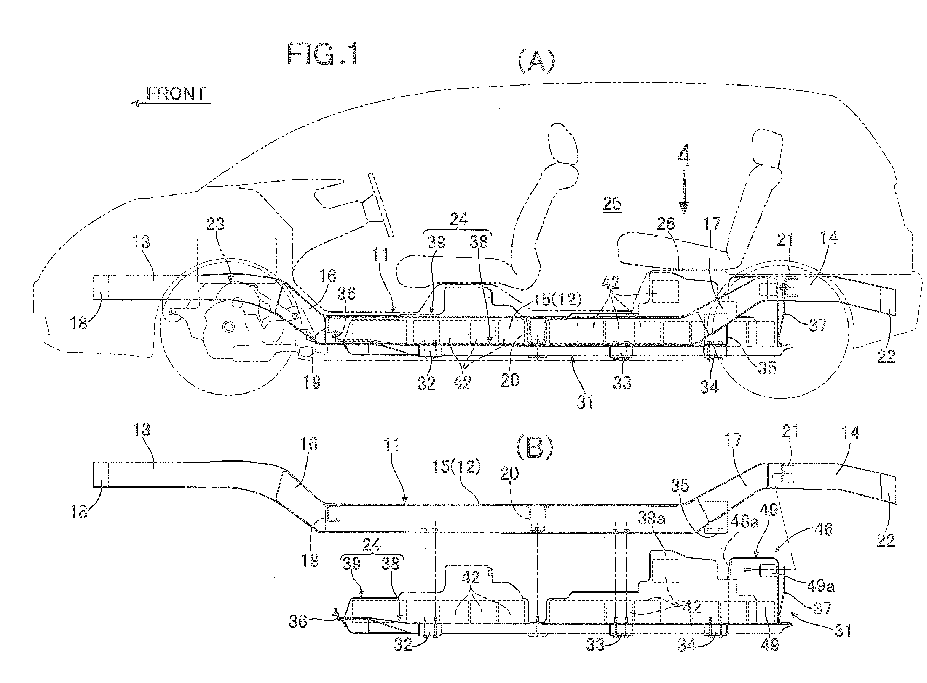

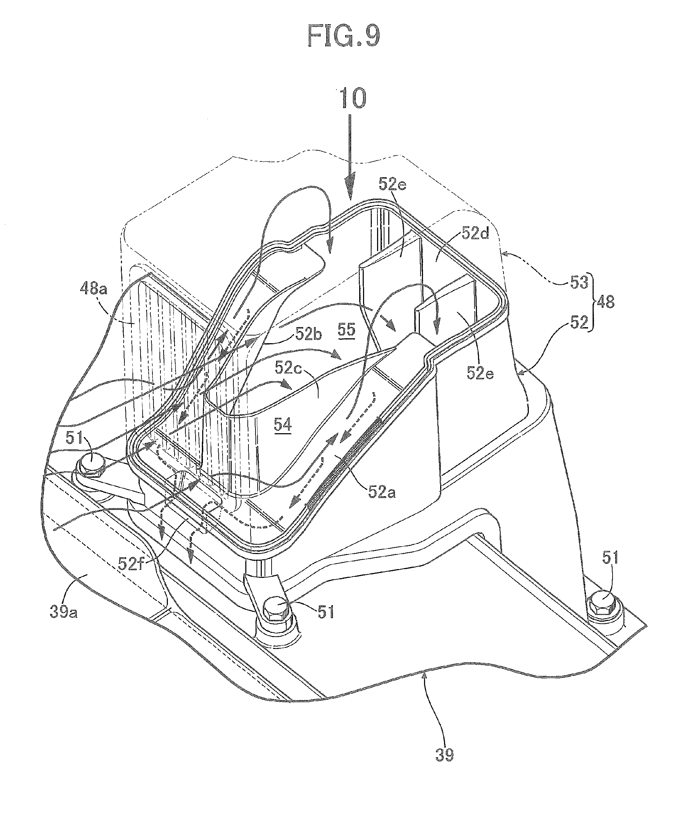

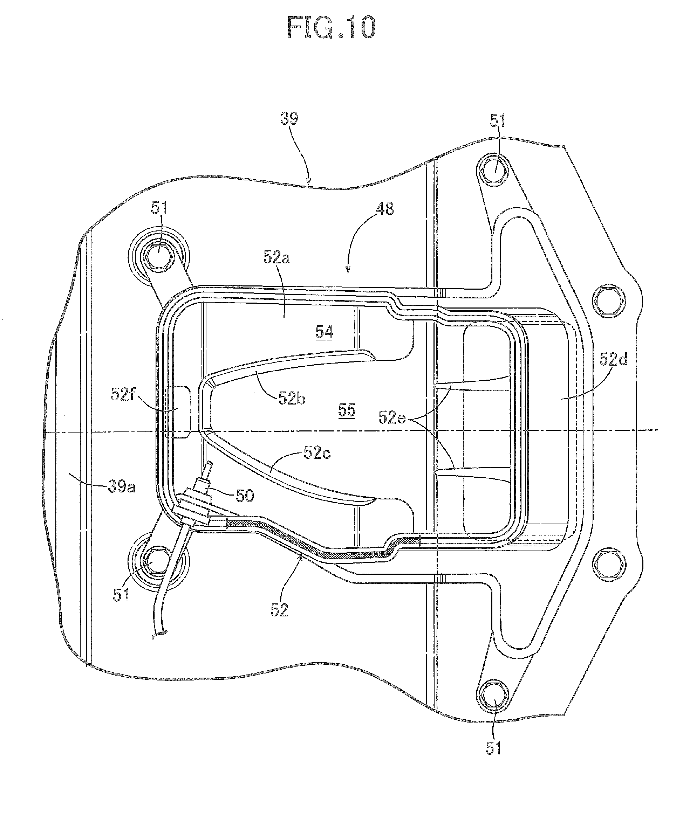

A mode for carrying out the present invention is explained below by reference to FIG. 1 to FIG. 11.

### FIRST EMBODIMENT

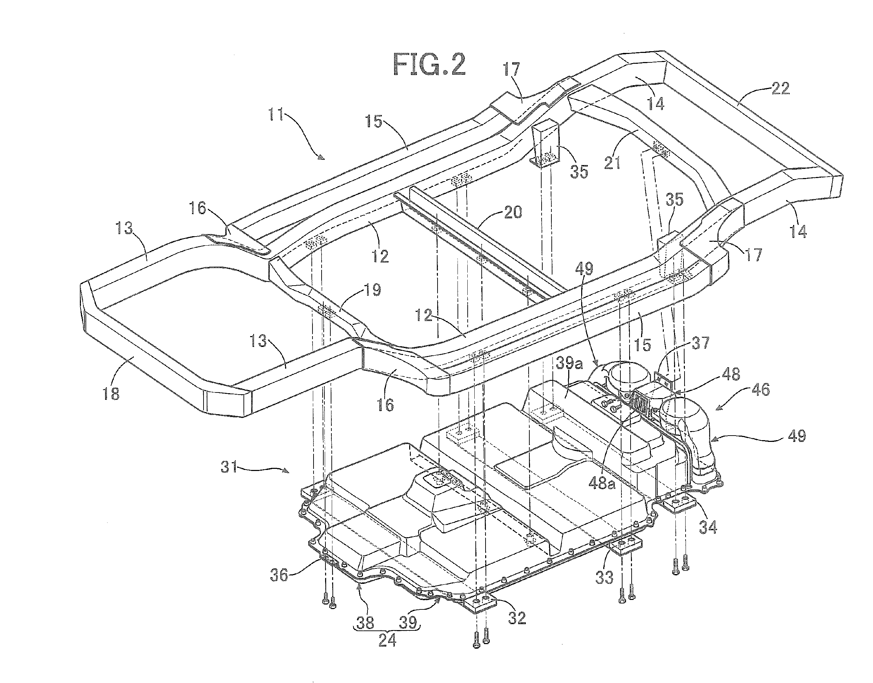

As shown in FIG. 1 and FIG. 2, a vehicle body frame 11 of an electric automobile includes a pair of left and right floor frames 12 and 12 extending in the vehicle body fore-and-aft direction, a pair of left and right front side frames 13 and 13 extending forwardly from the front ends of the floor frames 12 and 12 while bending upwardly, a pair of left and right rear side frames 14 and 14 extending rearwardly from the rear ends of the floor frames 12 and 12 while bending upwardly, a pair of left and right side sills 15 and 15 disposed outside in the vehicle width direction of the floor frames 12 and 12, a pair of left and right front outriggers 16 and 16 connecting the front ends of the side sills 15 and 15 to the front ends of the floor frames 12 and 12, a pair of left and right rear outriggers 17 and 17 connecting the rear ends of the side sills 15 and 15 to the rear ends of the floor frames 12 and 12, a front bumper beam 18 providing a connection between front end parts of the pair of left and right front side frames 13 and 13 in the vehicle width direction, a front cross member 19 providing a connection between front end parts of the pair of left and right floor frames 12 and 12 in the vehicle width direction, a middle cross member 20 providing a connection between intermediate parts, in the fore-and-aft direction, of the pair of left and right floor frames 12 and 12 in the vehicle width direction, a rear cross member 21 providing a connection between intermediate parts, in the fore-and-aft direction, of the pair of left and right rear side frames 14 and 14 in the vehicle width direction, and a rear bumper beam 22 providing a connection between rear end parts of the pair of left and right rear side frames 14 and 14 in the vehicle width direction.

A battery pack 31, which is a power source for a motor/generator 23 that is a drive source for making the electric automobile travel, is supported so as to be suspended from a lower face of the vehicle body frame 11. That is, fixed to a lower face of the battery pack 31 are a front suspension beam 32, middle suspension beam 33, and rear suspension beam 34 extending in the vehicle width direction, fixed to front parts of the pair of left and right floor frames 12 and 12 are opposite ends of the front suspension beam 32, fixed to rear parts of the pair of left and right floor frames 12 and 12 are opposite ends of the middle suspension beam 33, and fixed to the lower ends of support members 35 and 35 hanging down from front parts of the pair of left and right rear side frames 14 and 14 are opposite ends of the rear suspension beam 34. Furthermore, a middle part, in the vehicle width direction, of the front end of the battery pack 31 is supported on the front cross member 19 via a front bracket 36, and a middle part, in the vehicle width direction, of the rear end of the battery pack 31 is supported on the rear cross member 21 via a rear bracket 37. Moreover, the battery pack 31 is supported on a lower face of the middle cross member 20 in an intermediate position between the front suspension beam 32 and the middle suspension beam 33.

In a state in which the battery pack 31 is supported on the vehicle body frame 11, an upper face of the battery pack 31 opposes a lower part of a vehicle compartment 25 via a floor panel 26. That is, the battery pack 31 of the present embodiment is disposed outside the vehicle compartment 25.

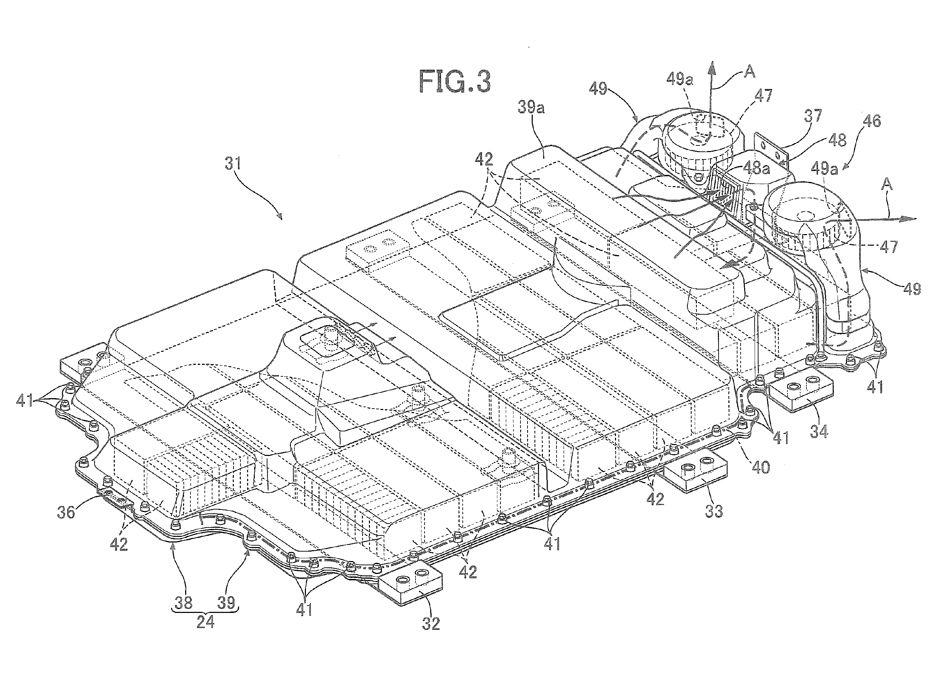

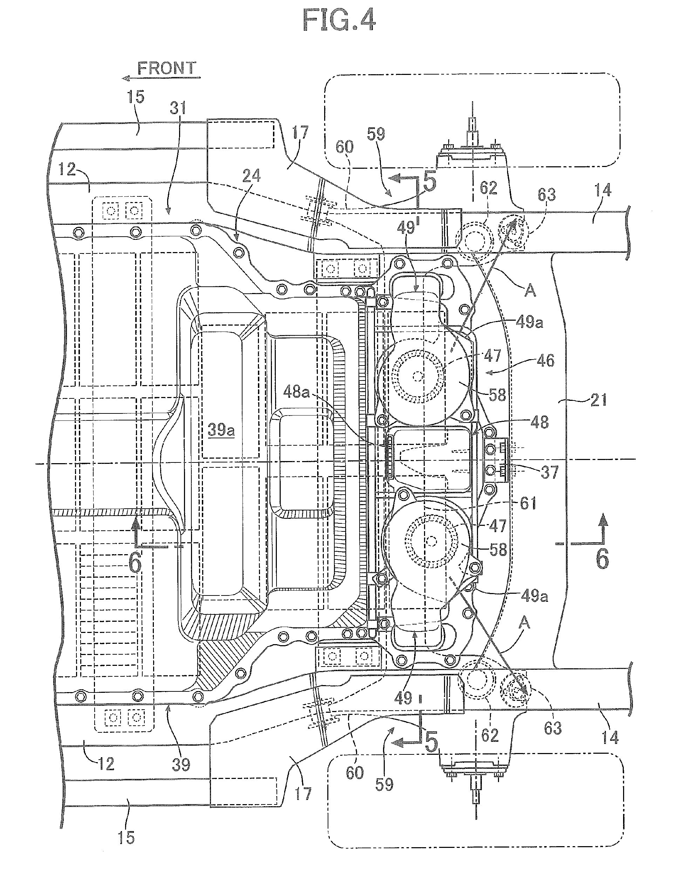

As shown in FIG. 3 and FIG. 4, the battery pack 31 includes a battery tray 38 made of metal and a battery cover 39, made of a synthetic resin, superimposed on the battery tray 38 from above. A peripheral part of the battery tray 38 and a peripheral part of the battery cover 39 are secured by means of a large number of bolts 41 with a seal member 40 (see FIG. 3) sandwiched therebetween, the interior of the battery pack 31 being therefore basically hermetically sealed. A plurality of battery modules 42, in which a plurality of battery cells are stacked in series, are mounted on an upper face of the battery tray 38. The battery tray 38 and the battery cover 39 form a battery case 24 of the present invention.

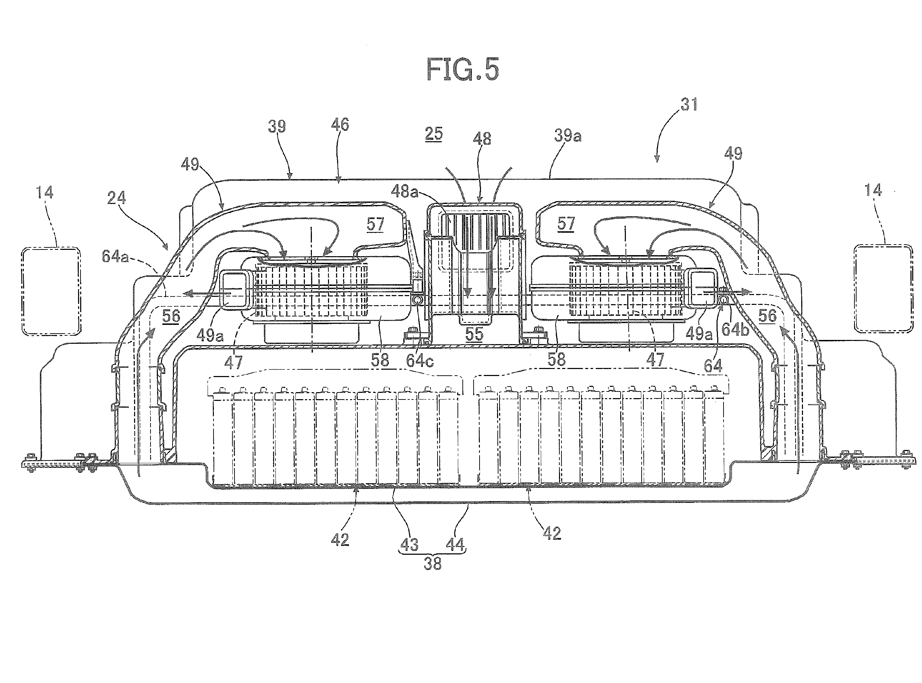

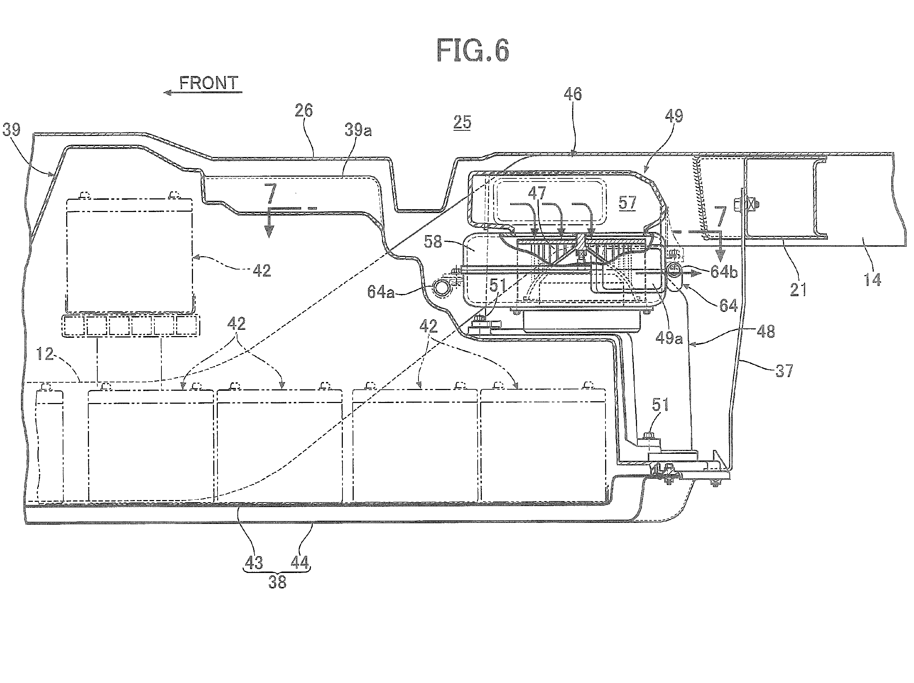

The battery tray 38 is formed by joining an upper plate 43 and a lower plate 44 (see FIG. 5 and FIG. 6), a cooling passage for cooling air to flow being formed therebetween, and heat exchange is carried out with the battery modules 42, which are in contact with an upper face of the upper plate 43, thus cooling the battery modules 42, which generate heat by charging/discharging. The cooling passage of the battery tray 38 is divided at a predetermined position so as to be connected to a pair of discharge ducts 49 and 49 (see FIG. 3).

A cooling device 46 provided on a rear part of the battery pack 31 includes a suction duct 48 disposed in a middle part in the vehicle width direction and the pair of left and right discharge ducts 49 and 49 disposed on opposite sides in the vehicle width direction of the suction duct 48. The lower end of the suction duct 48 is connected to the rear end of the battery tray 38, and the lower ends of the left and right discharge ducts 49 and 49 are connected to the rear end of the battery tray 38. A cooling air suction port 48a opens on a front face of an upper part of the suction duct 48 so as to face forward, the cooling air suction port 48a sucking air outside the battery pack 31 into the interior of the suction duct 48 as cooling air. Electric cooling fans 47 and 47 are housed in the interiors of the respective discharge ducts 49 and 49, and cooling air discharge ports 49a and 49a are formed so as to face the outer peripheries of the respective cooling fans 47 and 47, the cooling air discharge ports 49a and 49a discharging cooling air that has been subjected to heat exchange. The left and right cooling air discharge ports 49a and 49a open rearwardly and outwardly in the vehicle width direction (see arrow A in FIG. 3, FIG. 4, and FIG. 7).

Therefore, when the cooling fans 47 and 47 are driven, cooling air sucked in via the cooling air suction port 48a of the suction duct 48 is supplied to the interior of the battery tray 38, carries out heat exchange with the battery modules 42 while flowing through the interior of the battery tray 38, then passes through the cooling fans 47 and 47 of the discharge ducts 49 and 49, and is discharged via the cooling air discharge ports 49a and 49a.

The structure of the cooling device 46 is now explained in detail by reference to FIG. 4 to FIG. 10.

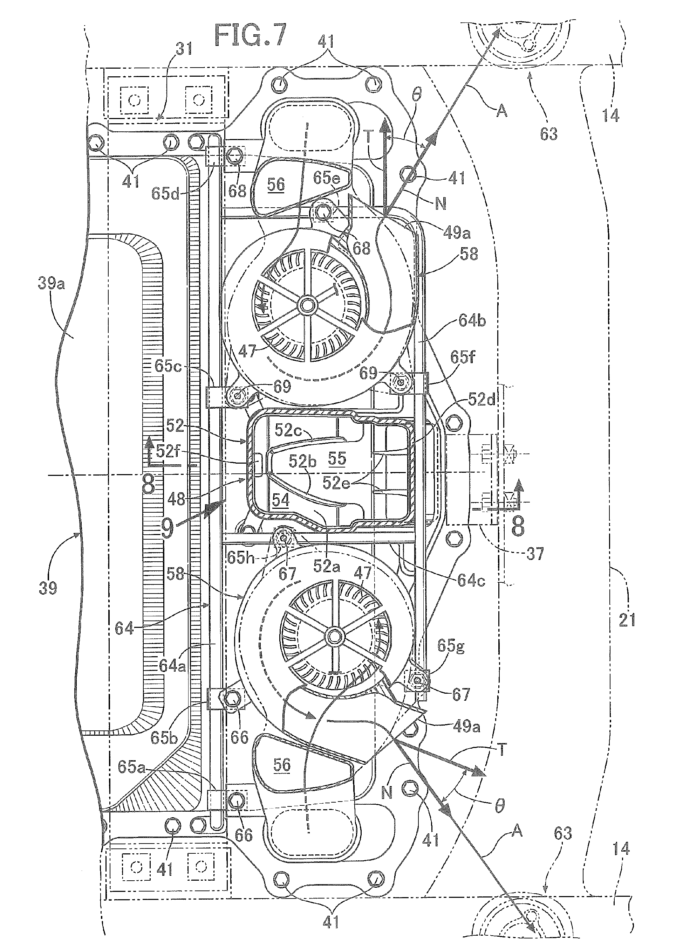

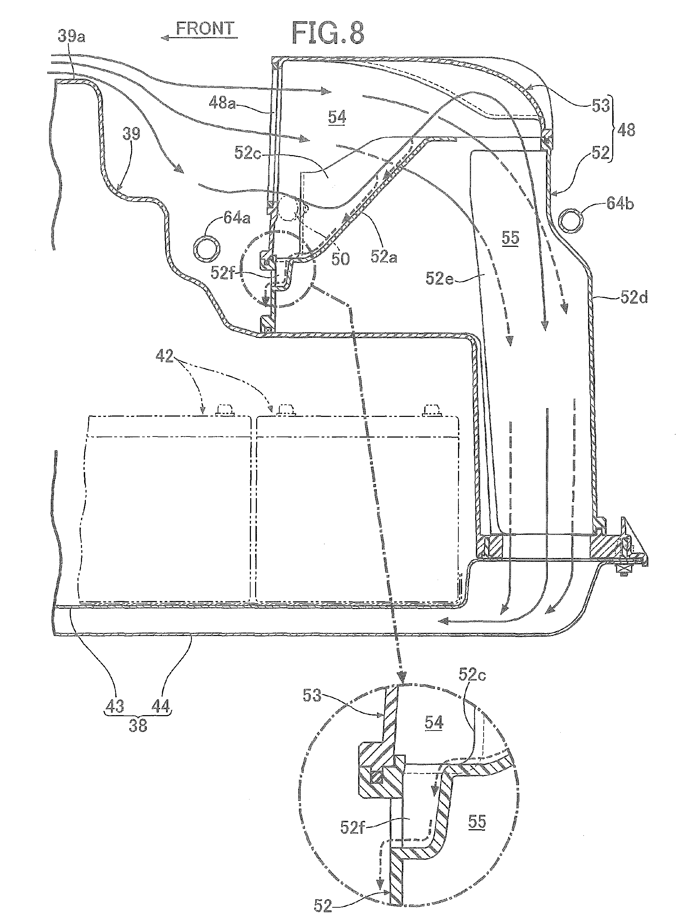

As shown in FIG. 7 to FIG. 10, the suction duct 48 of the cooling device 46 is provided to the rear of a projecting portion 39a protruding upwardly from a rear part of the battery cover 39 (see FIG. 8), and includes a lower member 52 fixed to an upper face of the battery cover 39 by means of four bolts 51 and an upper member 53 joined so as to cover an open part at the upper end of the lower member 52, the cooling air suction port 48a opening on a front face of the upper member 53. With regard to the position of the cooling air suction port 48a, it is positioned above a rear part of the battery pack 31 and is positioned to the rear of the projecting portion 39a of the battery cover 39.

The interior of the suction duct 48 includes an upstream side suction passage 54 extending rearwardly from the cooling air suction port 48a, and a downstream side suction passage 55 extending downwardly from the rear end of the upstream side suction passage 54 and communicating with the battery tray 38. The upstream side suction passage 54 is defined in the interior of the upper member 53, and the downstream side suction passage 55 is defined in the interior of the lower member 52.

A bottom wall 52a is integrally formed on an upper face of the lower member 52, the bottom wall 52a providing partitioning between the upstream side suction passage 54 and the downstream side suction passage 55, and the bottom wall 52a is inclined so as to gradually become higher in going from the front to the rear. A cutout 52b is formed in an intermediate part in the vehicle width direction of the bottom wall 52a, the cutout 52b extending in a U-shape or V-shape from the rear to the front, and a vertical wall 52c rises upwardly from the edge of the cutout 52b. A space for cooling air to pass through is ensured between the upper end of the vertical wall 52c and a ceiling part of the upper member 53. Two ribs 52e and 52e extending in the vertical direction in the interior of the downstream side suction passage 55 are provided so as to project forwardly on a rear side wall 52d of the lower member 52 that opposes the cooling air suction port 48a, the lower ends of these ribs 52e and 52e extending up to a part where they are connected to the battery tray 38. A drain hole 52f is formed at the lower end of the bottom wall 52a positioned beneath the cooling air suction port 48a, the drain hole 52f providing communication between the upstream side suction passage 54 and the outside of the suction duct 48.

Furthermore, the upstream side suction passage 54 of the suction duct 48 is provided with a temperature sensor 50 for detecting the temperature of cooling air that is sucked in. The position of the temperature sensor 50 is set at a position that is lower than the upper end of the vertical wall 52c.

As shown in FIG. 4 to FIG. 7, the discharge ducts 49 and 49 of the cooling device 46 include upstream side discharge passages 56 and 56 rising upwardly from the rear end of the battery tray 38, and downstream side discharge passages 57 and 57 extending to the inside in the vehicle width direction from the upper ends of the upstream side discharge passages 56 and 56, and the cooling fans 47 and 47 are disposed immediately below the downstream side discharge passages 57 and 57. Spiral-shaped fan casings 58 and 58 surround the outer peripheries of the cooling fans 47 and 47, and the cooling air discharge ports 49a and 49a open at the outer ends of the fan casings 58 and 58.

The fan casings 58 and 58 for the left and right cooling fans 47 and 47 employ interchangeable identical members, and therefore when seen in a plan view (see FIG. 7) the left and right fan casings 58 and 58 are asymmetrical with respect to the vehicle body center line. As described above, the cooling air discharge ports 49a and 49a of the left and right cooling fans 47 and 47 discharge cooling air, as shown by arrow A, rearwardly and outwardly in the vehicle width direction, a normal N perpendicular to the cooling air discharge ports 49a and 49a being inclined relative to a tangent T of the fan casings 58 and 58 only by an angle θ.

Since cooling air flows out at right angles to a plane formed by the cooling air discharge ports 49a and 49a, due to the normal N perpendicular to the cooling air discharge ports 49a and 49a being inclined relative to the tangent T of the fan casings 58 and 58 only by the angle 0 it is possible to discharge cooling air from the left and right cooling air discharge ports 49a and 49a in substantially symmetrical directions while reducing the number of types of components by using the interchangeable identical members for the left and right fan casings 58 and 58.

Suspension systems 59 and 59 for the suspension of rear wheels (see FIG. 4) are formed from for example an H-shaped torsion beam type suspension, and include left and right trailing arm parts 60 and 60, a torsion beam part 61 for connecting them in the vehicle width direction, and left and right suspension springs 62 and 62 and left and right suspension dampers 63 and 63 for supporting the rear ends of the trailing arm parts 60 and 60 on lower faces of the rear side frames 14 and 14.

The directions (see arrows A) in which cooling air is discharged from the cooling air discharge ports 49a and 49a of the left and right fan casings 58 and 58 overlap parts of the suspension systems 59 and 59 (the suspension dampers 63 and 63 in the embodiment) when seen in a plan view. Since the direction A in which cooling air is discharged from the cooling air discharge ports 49a and 49a is set so as to be the direction described above, cooling air can be discharged smoothly outside the vehicle through spaces in the suspension systems 59 and 59 while minimizing interference with the vehicle body.

A support frame 64 supporting the discharge ducts 49 and 49 together with the cooling fans 47 and 47 on the upper face of the rear part of the battery case 24 includes a first frame 64a formed by bending a pipe material into an inverted U-shape and providing opposite ends thereof so as to stand on left and right upper faces of the battery cover 39, an L-shaped second frame 64b connected to the right end side of the first frame 64a and extending rearwardly and leftwardly, and an I-shaped third frame 64c providing a connection between the left end side of the second frame 64b and an intermediate part of the first frame 64a in the fore-and-aft direction.

The support frame 64 includes four mounting brackets 65a to 65d fixed to the first frame 64a, three mounting brackets 65e to 65g fixed to the second frame 64b, and one mounting bracket 65h fixed to the third frame 64c (see FIG. 7). The left discharge duct 49 is secured to the two mounting brackets 65a and 65b of the first frame 64a by means of bolts 66 and 66 respectively, and the left discharge duct 49 and the left cooling fan 47 are secured together to the mounting bracket 65g of the second frame 64b and the mounting bracket 65h of the third frame 64c by bolts 67 and 67 respectively.

Furthermore, the right discharge duct 49 is secured to the mounting bracket 65d of the first frame 64a and the mounting bracket 65e of the second frame 64b by means of bolts 68 and 68 respectively, and the right discharge duct 49 and the right cooling fan 47 are secured together to the mounting bracket 65c of the first frame 64a and the mounting bracket 65f of the second frame 64b by means of bolts 69 and 69 respectively.

In this way, since the discharge ducts 49 and 49 and the cooling fans 47 and 47 are secured together to the support frames by the common bolts 67, 67, 69, and 69, it is possible to reduce the size of the cooling device 46 and cut the number of components.

The operation of the embodiment of the present invention having the above arrangement is now explained.

Since the battery modules 42 housed within the battery case 24 of the battery pack 31 generate heat due to charging/discharging, they are cooled with cooling air supplied to the interior of the battery tray 38 by means of the cooling device 46. That is, when the cooling fans 47 and 47 are driven, air between the upper face of the battery case 24 and the lower face of the floor panel 26 is sucked in as cooling air via the cooling air suction port 48a of the suction duct 48 and supplied to the interior of the battery tray 38 via the upstream side suction passage 54 and downstream side suction passage 55 of the suction duct 48.

As shown in FIG. 3, cooling air supplied to the interior of the battery tray 38 carries out heat exchange between the upper plate 43 of the battery tray 38 and the bottom faces of the battery modules 42 while dividing at a predetermined position and flowing to the pair of discharge ducts 49 and 49, thus cooling the battery modules 42. Cooling air that has flowed into the discharge ducts 49 and 49 passes through the upstream side discharge passages 56 and 56, the downstream side discharge passages 57 and 57, and the cooling fans 47 and 47, and is discharged via the cooling air discharge ports 49a and 49a of the fan casings 58 and 58.

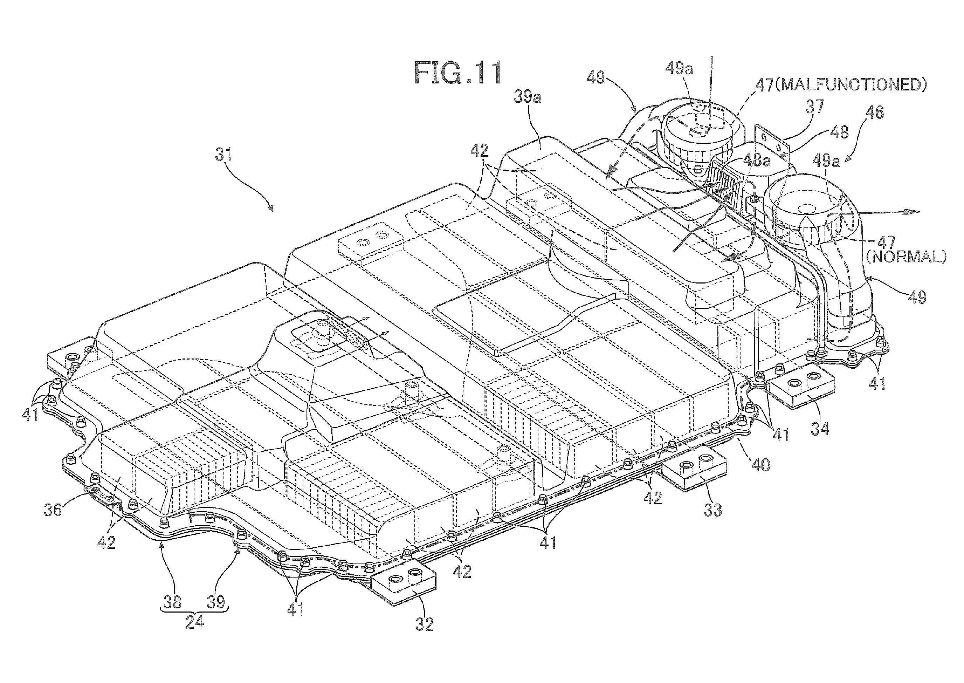

In this process, even if one of the left and right cooling fans 47 malfunctioned and became inoperative, as shown in FIG. 11, due to operation of the other cooling fan 47, by making cooling air flow via the path: suction duct 48 → cooling passage → other discharge duct 49 → other cooling fan 47, and also making cooling air flow via the path: one discharge duct 49 → cooling passage → other discharge duct 49 → other cooling fan 47, all of the battery modules 42 within the battery case 24 can be cooled.

Furthermore, since the battery pack 31 is mounted beneath the vehicle compartment 25 and the suction duct 48 and the discharge ducts 49 and 49 are disposed at positions sandwiched between the battery case 24 and the vehicle compartment 25, compared with a case in which suction and discharge of cooling air is carried out from the front or the rear of the battery case 24 by connecting another member such as a pipe-shaped duct, it becomes possible to contain the suction path and the discharge path for cooling air within the upper face of the battery case 24. As a result, interference between the battery case 24 and a component disposed in front of or to the rear of the battery case 24 becomes less likely; not only does it become easy to lay out the battery case 24, but it is also unnecessary to link a pipe-shaped duct, etc. to the battery case 24 and there is no need for sealing a linking part, thus enabling the number of components to be reduced.

Moreover, since the suction duct 48 and the discharge ducts 49 and 49 are disposed so that parts thereof overlap when viewed in the vehicle width direction, it becomes possible to compactly place together the suction duct 48 and the discharge ducts 49 and 49, to make the suction duct 48 and the discharge ducts 49 and 49 less likely to interfere with the floor panel 26, which has a step part extending in the vehicle width direction, the rear cross member 21 extending in the vehicle width direction, etc., and to make layout of the battery pack 31 in the vehicle body easy. Furthermore, since the discharge ducts 49 and 49 are disposed on opposite sides, in the vehicle width direction, of the suction duct 48, which is disposed in the middle in the vehicle width direction, positioning the discharge ducts 49 and 49 between the suction duct 48 and the wheels, which throw up dust or water, enables it to be made difficult for dust or water to be sucked in together with cooling air via the cooling air suction port 48a.

Furthermore, since the suction duct 48 is disposed in the upper part at the rear end of the battery cover 39, the projecting portion 39a is provided on the battery cover 39 so as to protrude upwardly toward the vehicle compartment 25, and the suction duct 48 is disposed to the rear of the projecting portion 39a of the battery cover 39, the projecting portion 39a of the battery cover 39 can provide shielding from dust or water, which is thrown up from the front of the vehicle body while the vehicle is traveling, thus making it difficult for dust or water to be sucked into the interior of the battery cover 39 via the cooling air suction port 48a.

Moreover, since the cooling air suction port 48a of the suction duct 48 opens so as to face toward the front of the vehicle body, and the cooling air discharge ports 49a and 49a of the discharge ducts 49 and 49 open so as to face toward the rear of the vehicle body, it is possible to make it difficult for cooling air that has been discharged via the cooling air discharge ports 49a and 49a and has an increased temperature after heat exchange to be sucked again into the battery tray 38 via the cooling air suction port 48a, thus preventing degradation of the cooling efficiency of the battery modules 42 due to recirculation of cooling air. In particular, since the cooling air discharge ports 49a and 49a open so as to face toward the rear of the vehicle body and to the outside in the in the vehicle width direction, cooling air that has been discharged via the cooling air discharge ports 49a and 49a is pushed rearwardly by means of traveling air flowing along left and right side faces of the vehicle body, thus making it difficult for it to stay in the vicinity of the battery pack 31.

Furthermore, the suction duct 48 can separate effectively water contained in cooling air due to its special shape and prevent it from entering the interior of the battery tray 38. That is, cooling air that has been sucked into the upstream side suction passage 54 from the lower part of the cooling air suction port 48a of the suction duct 48 is divided to the left and right by means of the vertical wall 52c, which enlarges toward the downstream side while rising along the upwardly inclined bottom wall 52a; after water is separated by means of contact with the bottom wall 52a and the vertical wall 52c, it is diverted downwardly from the downstream end of the bottom wall 52a and flows into the downstream side suction passage 55. Water that has been separated from cooling air flows down by virtue of gravity along the vertical wall 52c and the bottom wall 52a and is discharged outside the suction duct 48 via the drain hole 52f beneath the vertical wall 52c.

Cooling air that has been sucked into the upstream side suction passage 54 from the upper part of the cooling air suction port 48a of the suction duct 48 passes over the upper end of the vertical wall 52c and is then diverted downwardly, passes through the cutout 52b of the bottom wall 52a, and flows into the downstream side suction passage 55. Cooling air that has thus flowed into the downstream side suction passage 55 flows downwardly while being aligned by means of the two ribs 52e and 52e provided on the side wall 52d and flows into the cooling passage of the battery tray 38.

As hereinbefore described, while water in cooling air is efficiently trapped by means of the bottom wall 52a and the vertical wall 52c provided in the interior of the suction duct 48, thus preventing it from entering the interior of the battery tray 38, any increase in pressure loss of the cooling air due to the bottom wall 52a and the vertical wall 52c being provided can be minimized by increasing the flow path cross-sectional area by providing the bottom wall 52a with the cutout 52b, thus enabling a balance to be achieved effectively between separation of water and decrease in pressure loss.

The temperature sensor 50 provided in the interior of the suction duct 48 detects the temperature of cooling air (intake air temperature); when a battery temperature detected by a battery temperature sensor, which is not illustrated, reaches the intake air temperature or higher, the cooling fans 47 and 47 are driven, and when the battery temperature falls below the intake air temperature the cooling fans 47 and 47 are stopped. In a state in which the cooling fans 47 and 47 are stopped there is a possibility that cooling air in the interior of the battery tray 38, which has a high temperature and a low specific gravity, will flow in reverse, that is, upwardly, in the interior of the suction duct 48, and stay in the vicinity of the ceiling of the upper member 53 of the suction duct 48.

In this process, if the temperature sensor 50 were provided in the vicinity of the ceiling of the upper member 53 of the suction duct 48, since the temperature sensor 50 would not correctly detect the intake air temperature but would detect the temperature of stagnant air, which would have a high temperature, there would be a possibility that even if the battery temperature increased the cooling fans 47 and 47 would not be driven quickly. However, in accordance with the present embodiment, since the temperature sensor 50 is provided at a position that is lower than the upper end of the vertical wall 52c of the suction duct 48, it is possible to prevent the intake air temperature from being erroneously detected.

An embodiment of the present invention is explained above, but the present invention may be modified in a variety of ways as long as the modifications do not depart from the spirit and scope thereof.

For example, the embodiment includes one suction duct 48 and two discharge ducts 49 and 49, but there may be any number of suction ducts 48 and discharge ducts 49.

Furthermore, the suspension system 59 of the embodiment is an H-shaped beam type suspension, but the suspension system 59 may be of any type.

## Claims

1. A battery pack for an electric vehicle, comprising a battery case (24) that houses a plurality of batteries (42) and is disposed beneath a vehicle compartment (25), a cooling air suction member (48) that sucks cooling air into a cooling passage formed in an interior of the battery case (24), and a cooling air discharge member (49) that discharges cooling air from the cooling passage, wherein
the cooling air suction member (48) has a cooling air suction port (48a) disposed between the battery case (24) and the vehicle compartment (25) and opening so as to face toward the front of a vehicle body, and the cooling air discharge member (49) has a cooling air discharge port (49a) opening so as to face toward the rear of the vehicle body.

2. The battery pack for an electric vehicle according to Claim 1, wherein the cooling air discharge member (49) has the cooling air discharge port (49a) opening toward the rear of the vehicle body and outward in a vehicle width direction.

3. The battery pack for an electric vehicle according to Claim 2, wherein the vehicle comprises a suspension system (59) for suspension of wheels, a virtual line that is perpendicular to an open end face of the cooling air discharge port (49a) intersecting the suspension system (59) when seen in a plan view.

4. The battery pack for an electric vehicle according to Claim 2 or Claim 3, wherein the cooling air discharge port (49a) opens on an outer periphery of a cooling fan (47) that is housed in an interior of the cooling air discharge member (49), an open end face of the cooling air discharge port (49a) being inclined relative to a plane that is perpendicular to the direction in which the cooling fan (47) blows.

5. The battery pack for an electric vehicle according to Claim 4, wherein two fan casings (58) for the cooling fans (47) individually housed in the interiors of two of the cooling air discharge members (49) that are disposed apart in the vehicle width direction are interchangeable members having an identical shape.

6. The battery pack for an electric vehicle according to any one of Claim 1 to Claim 5, wherein the battery case (24) comprises a projecting portion (39a) that protrudes upwardly toward the vehicle compartment (15), and the cooling air suction member (48) is disposed to the rear of the projecting portion (39a).

7. The battery pack for an electric vehicle according to any one of Claim 1 to Claim 6, wherein the cooling air suction member (48) is disposed in an upper part of a rear end of the battery case (24).
